(19) Europäisches Patentamt
European Patent Office
Office européen des brevets

(11) Veröffentlichungsnummer: **0 048 886**
**B1**

# (12) EUROPÄISCHE PATENTSCHRIFT

(45) Veröffentlichungstag der Patentschrift: **25.01.84**

(51) Int. Cl.[3]: **C 09 K 3/34**, C 09 B 55/00, C 09 B 1/16, C 09 B 1/50

(21) Anmeldenummer: **81107269.3**

(22) Anmeldetag: **15.09.81**

(54) **Flüssigkristallmischung mit einem pleochroitischen Anthrachinon-Farbstoff und Herstellungsverfahren für einen solchen Farbstoff.**

(30) Priorität: **30.09.80 DE 3036895**

(43) Veröffentlichungstag der Anmeldung: **07.04.82 Patentblatt 82/14**

(45) Bekanntmachung des Hinweises auf die Patenterteilung: **25.01.84 Patentblatt 84/4**

(84) Benannte Vertragsstaaten: **CH DE FR GB IT LI NL SE**

(56) Entgegenhaltungen:
**DE - C - 892 224**
**GB - A - 153 055**

(73) Patentinhaber: **SIEMENS AKTIENGESELLSCHAFT, Berlin und München Wittelsbacherplatz 2, D-8000 München 2 (DE)**

(72) Erfinder: **Scherowsky, Günther, Dr., Winklerstrasse 18B, D-1000 Berlin 33 (DE)**
Erfinder: **Möller, Alexander, Dipl.-Chem., Potsdamer Chaussee 50, D-1000 Berlin 38 (DE)**
Erfinder: **Heppke, Gerd, Prof. Dr., Johann-Georg-Strasse 3, D-1000 Berlin 31 (DE)**
Erfinder: **Knippenberg, Burkhard, Dipl.-Ing., Föttingerzeile 256, D-1000 Berlin 48 (DE)**

**EP 0 048 886 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

# Flüssigkristallmischung mit einem pleochroitischen Anthrachinon-Farbstoff und Herstellungsverfahren für einen solchen Farbstoff

Die Erfindung betrifft ein mit einem Anthrachinonderivat versetztes Flüssigkristallgemisch gemäss dem Oberbegriff des Anspruchs 1 und bezieht sich ausserdem auf eine Methode zum Synthetisieren des Anthrachinonabkömmlings.

Die bekannten Farbstoffe, die für Flüssigkristallanzeigen in Frage kommen, absorbieren nur in einem relativ begrenzten Bereich des sichtbaren Frequenzspektrums. Man muss sie daher miteinander mischen, wenn man ein schwarzes Bild bzw. einen schwarzen Hintergrund haben will oder einen möglichst grossen Hell/Dunkel-Kontrast anstrebt. In der Praxis bereitet die Herstellung solcher Gemische erhebliche Schwierigkeiten: Immer wieder muss man feststellen, dass ein Gemisch, das ein einigermassen akzeptables Absorptionsspektrum hat, sich nicht in genügender Menge lösen lässt und/oder nicht in allen seinen Bestandteilen ausreichend stabil ist. Diese Probleme hängen damit zusammen, dass die bisher untersuchten Mischungen nicht die geeigneten Komponenten haben.

Aufgabe der vorliegenden Erfindung ist es, auf der Basis der eingangs genannten Anthrachinone einen beständigen roten Farbstoff zu gewinnen, der kräftige Farbkontraste liefert, darüber hinaus brauchbare Unbunt-Gemische aus höchstens drei Komponenten ermöglicht und überdies ohne sonderlichen Aufwand synthetisiert werden kann. Gelöst wird diese Aufgabe erfindungsgemäss durch einen Flüssigkristall mit den Merkmalen des Patentanspruchs 1.

Flüssigkristalle mit besonders guten Anthrachinonen der vorgeschlagenen Formel sind Gegenstand der Ansprüche 2 bis 9. Die Ansprüche 10 und 11 beinhalten Flüssigkristall-Lösungen, die man auf der Grundlage der erfindungsgemäss vorgesehenen Farbstoffe bilden kann. Und in den Ansprüchen 12 und 13 ist angegeben, wie einige der vorliegenden Anthrachinone dargestellt werden können.

Der Lösungsvorschlag soll nun anhand mehrerer bevorzugter Ausführungsbeispiele in Verbindung mit der beigefügten Zeichnung näher erläutert werden. Es zeigen:

Fig. 1 die Extinktionsspektren einer ersten roten Flüssigkristall-Lösung für Licht, das im einen Fall parallel und im anderen Fall senkrecht zur Längsachse der einheitlich ausgerichteten Farbstoff-Moleküle polarisiert ist;

Fig. 2 die Orte im Farbdreieck, die den Spektren aus Fig. 1 entsprechen;

Fig. 3 die Extinktionsspektren einer zweiten roten Flüssigkristall-Lösung;

Fig. 4 die zu den Spektren der Fig. 3 korrespondierenden Orte im Farbdreieck;

Fig. 5 die Extinktionsspektren einer unbunten Flüssigkristall-Lösung und

Fig. 6 die zugehörigen Orte im Farbdreieck.

Rot-Beispiel 1

1,5-Diamino-2,6-di(phenylimino-methyl) anthrachinon

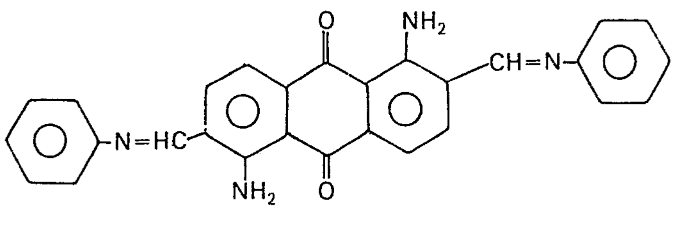

Synthese:

3,26 g (0,01 mol) 1,5-Dinitro-2,6-dimethyl-anthrachinon werden in 16 ml Essigsäure, 20 ml Acetanhydrid und 3 ml konzentrierter Schwefelsäure gelöst und bei 0°C portionsweise mit Chromtrioxid versetzt. Die Lösung wird auf Eis gegossen und extrahiert. Das erhaltene Diacetat wird in wässriger Natriumsulfidlösung reduziert und nach der Aufarbeitung durch Erhitzen in konzentrierter Salzsäure hydrolisiert. Das erhaltene Produkt wird nach dem Trocknen i.V. 4 h in Anilin, dem etwas Kaliumcarbonat zugegeben wurde, erhitzt. Aus der heiss filtrierten Lösung scheiden sich dunkelrote Kristalle ab, die durch Chromatographie an Kieselgel gereinigt werden.

MS (160°C): m/e = 444 (15%, $M^+$), 340 (7%, $M-C_7H_6N$)

$^1H$-NMR: ($CDCl_3$) $\delta$ = 7,15 (s, br, 10H, Ar-H); 7,5 (s, br, 4H, Ar-H); 8,45 (s, 2H, Ar-CH=N-); 9,9 (s, br, 4H, $-NH_2$)

$\lambda_{max}(CHCl_3)$: 540 nm

S = 0,69 (in «ROTN 404» der Fa. Hoffmann-La Roche)

Das Absorptionsverhalten dieser Verbindung lässt sich der Fig. 1 entnehmen. Dort ist die Extinktion E, die durchtretendes Licht erfährt, gegen die Wellenlänge $\lambda$ aufgetragen. Vermessen wurde eine 36 µm dicke Schicht, die aus der Flüssigkristall-Substanz «ZLI 1132» (Fa. Merck) mit einem Gehalt an 0,3 Gew.-% 1,5-Diamino-2,6-di(phenylimino-methyl)anthrachinon bestand und mit dem normierten Tageslicht «D 65» bestrahlt wurde. Die Flüssigkristall-Moleküle und damit auch die eingelagerten Farbstoff-Moleküle hatten eine einheitliche Vorzugsrichtung, und das Licht war einmal parallel und einmal senkrecht zu dieser Richtung polarisiert. Die zugehörigen Extinktionsspektren sind in dem Diagramm als Kurven 1 bzw. 2 eingetragen. Die aus den Spektren berechneten Orte im Farbdreieck sind

in Fig. 2 wiedergegeben. Diese Figur stellt das Farbdreieck in gewohnter Weise mit rechtwinkligen Koordinaten dar, wobei der Übersicht halber die sonst übliche Wellenlängenskala auf den Kanten des Dreiecks weggelassen ist (bekanntlich entsprechen die Eckpunkte rechts, oben und links den Spektrallinien 700, 520 und 400 nm). Das Farbdreieck umschliesst drei Punkte: Den Unbunt-Punkt «$x_U$», den Punkt «$x_P$», der aus der Kurve 1 ermittelt worden ist, und den zu Kurve 2 gehörenden Punkt «$x_S$».

Rot-Beispiel 2

1,5-Diamino-2,6-di(4-butylphenylimino-methyl)anthrachinon

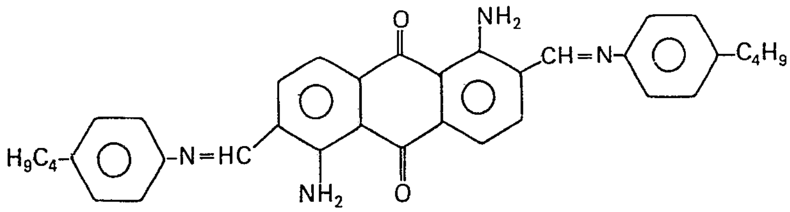

Synthese:

2,66 g 1,5-Diamino-2,6-dimethyl-anthrachinon werden mit 30 ml Nitrobenzol, 3 ml n-Butylanilin und 3 g Kaliumcarbonat 6 h unter Rückflussieden kräftig gerührt. Aus der erkalteten Lösung scheiden sich dunkelrote Kristalle ab, die abgesaugt, mit Chlorbenzol nachgewaschen und anschliessend an Kieselgel chromatographiert werden.

$^1$H-NMR: ($CDCl_3$) $\delta = 0{,}95$ (t, J=7Hz, 6H, $CH_2$-$CH_3$); 1,25–1,75 (m, 8H, -$CH_2$-$CH_2$); 2,55 (t, J=7Hz, 4H, Ar-$CH_2$); 7,15 (s, br, 8H, Ar-H); 7,5 (s, br, 4H, Ar-H); 8,45 (s, 2H, Ar-CH=N-); 9,9 (s, br, 4H, $NH_2$).

$\lambda_{max}$($CHCl_3$): 540 nm

S = 0,72 (in «ROTN 404»)

Rot-Beispiel 3

1,5-Diamino-2,6-di(4-butoxyphenylimino-methyl)anthrachinon

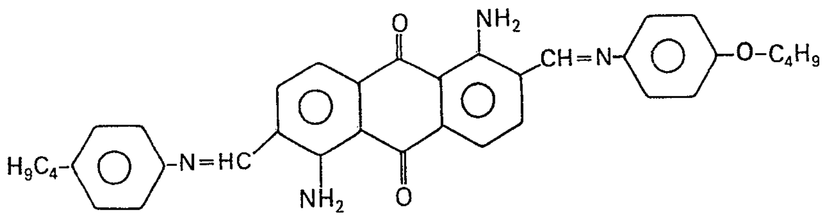

Synthese:

analog Rot-Beispiel 2

$^1$H-NMR: ($CDCl_3$) $\delta = 1{,}0$ (t, J=7Hz, 6H, $CH_2$-$CH_3$); 1,3–1,8 (m, 8H, -$CH_2$-$CH_2$); 3,9 (t, J=7Hz, 4H, -O-$CH_2$); 6,85 (d, J=8Hz, 4H, Ar-H); 7,2 (d, J=8Hz, 4H, Ar-H); 7,5 (s, br, 4H, Ar-H); 8,45 (s, 2H, Ar-CH=N-); 9,9 (s, br, 4H, $NH_2$).

$\lambda_{max}$($CHCl_3$): 540 nm

S = 0,74 (in «ROTN 404»)

Rot-Beispiel 4

1,5-Diamino-6-(4-butylphenylimino-methyl)anthrachinon-2-carbaldehyd

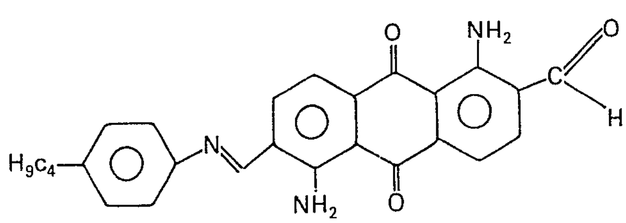

Synthese:

Bei der Darstellung des Rot-Beispiels 2 wird diese Verbindung als zweites Produkt chromatographisch isoliert.

$^1$H-NMR ($CDCl_3$) $\delta = 0{,}95$ (t, J=7Hz, 3H, $CH_2$-$CH_3$); 1,20–1,75 (m, 4H, -$CH_2$-$CH_2$-); 2,55 (t, J=7Hz, 2H, Ar-$CH_2$-); 7,15 (s, br, 4H); 8,4 (s, 1H, Ar-CH=N-); 9,86 (s, br, 5H, $NH_2$, CHO)

$\lambda_{max}$ ($CHCl_3$) = 537 nm

S = 0,79 (in «ROTN 404»)

Fig. 3 zeigt die Extinktionsspektren einer 36 µm dicken «ZLI 1132»-Schicht mit 0,5 Gew.-% 1,5-Diamino-6-(4-butylphenylimino-methyl)anthrachinon-2-carbaldehyd. Die korrespondierenden Orte im Farbdreieck sind in Fig. 4 dargestellt.

Unbunt-Beispiel

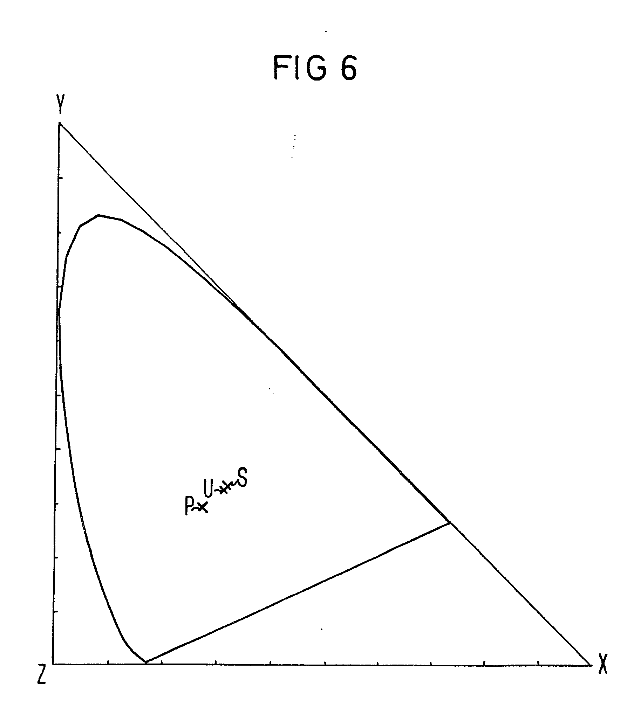

1,5-Diamino-2,6-di(phenylimino-methyl)anthrachinon ergibt mit dem gelben Farbstoff 1,5-Dihydroxy-2-methoxyphenyl-anthrachinon und dem blauen Farbstoff 1,5-Diamino-4,8-dihydroxy-3,7-di-(4-methoxyphenyl)anthrachinon Unbunt-Gemische, wenn Gelb, Blau und Rot in einem Gewichtsverhältnis 1:0,8–1,3:0,2–0,4 zueinander stehen. Variiert man das Mischungsverhältnis innerhalb der vorgegebenen Löslichkeitsgrenzen, so liefert die Rechnung beispielsweise für eine 36 µm dicke «ROTN 404»-Schicht ein optimales Additionsspektrum, wenn in der Flüssigkristall-Schicht der gelbe Farbstoff zu 0,3 Gew.-%, der blaue zu 0,3 Gew.-% und der rote zu 0,1 Gew.-% gelöst sind. Fig. 5 zeigt die gemessenen Extinktionskurven, Fig. 6 die entsprechenden Lagen im Farbdreieck.

Die Substanz ZLI 1132 ist ein Phenylcyclohexangemisch aus den vier Verbindungen:

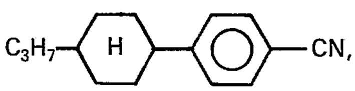

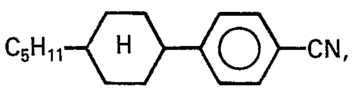

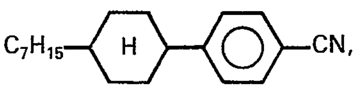

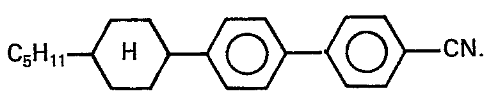

## Patentansprüche

1. Flüssigkristallmischung mit einem pleochroitischen Anthrachinon-Farbstoff der allgemeinen Formel

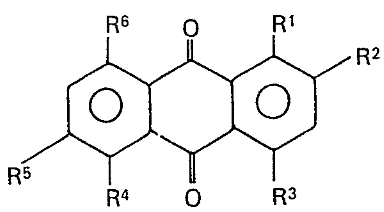

mit $R^1$, $R^3$, $R^4$, $R^6$ = H, OH, $OCH_3$, $NH_2$, $NHCH_3$, $NO_2$, dadurch gekennzeichnet, dass

$R^2 = CH = N-$ 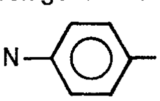

$R^7$ ($R^7$ = H, Alkyl, Cycloalkyl, Alkoxy, Alkylmercapto, Amino, Alkylamino, Dialkylamino, Nitro, Cyano, Halogen),

$R^5 = CH = N-$ 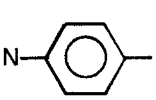

$R^8$, CHO, $COOR^9$, $CH_2$–$OR^9$ ($R^8$ = H, Alkyl, Cycloalkyl, Alkoxy, Alkylmercapto, Amino, Alkylamino, Dialkylamino, Nitro, Cyano, Halogen; $R^9$ = H, Alkyl) und entweder $R^1$, $R^4$ = H, OH, $NH_2$, $NHCH_3$, $NO_2$, $OCH_3$, wobei wenigstens einer der beiden Reste ein $NH_2$ oder ein $NHCH_3$ ist, $R^3 = R^6$ = H oder $R^3$, $R^6$ = H, OH, $NH_2$, $NHCH_3$, $NO_2$, $OCH_3$, wobei wenigstens einer der beiden Reste ein $NH_2$ oder ein $NHCH_3$ ist, $R^1 = R^4$ = H.

2. Flüssigkristallmischung nach Anspruch 1, dadurch gekennzeichnet, dass gilt $R^1 = R^4 = NH_2$, $R^2 = R^5$.

3. Flüssigkristallmischung nach Anspruch 2, dadurch gekennzeichnet, dass gilt $R^7 = C_nH_{2n+1}$ ($0 \leqq n \leqq 8$).

4. Flüssigkristallmischung nach Anspruch 3, dadurch gekennzeichnet, dass gilt n = 0.

5. Flüssigkristallmischung nach Anspruch 3, dadurch gekennzeichnet, dass gilt n = 4.

6. Flüssigkristallmischung nach Anspruch 2, dadurch gekennzeichnet, dass gilt $R^7 = O\text{-}C_nH_{2n+1}$ ($0 \leqq n \leqq 8$).

7. Flüssigkristallmischung nach Anspruch 6, dadurch gekennzeichnet, dass gilt n = 4.

8. Flüssigkristallmischung nach Anspruch 1, dadurch gekennzeichnet, dass gilt $R^1 = R^4 = NH_2$, $R^7 = C_nH_{2n+1}$ ($0 \leqq n \leqq 8$), $R^5$ = CHO. = H, OH, $NH_2$,

9. Flüssigkristallmischung nach Anspruch 8, dadurch gekennzeichnet, dass gilt n = 4.

10. Flüssigkristallmischung nach einem der Ansprüche 1 bis 9, dadurch gekennzeichnet, dass sie zusätzlich noch einen gelben und einen blauen Farbstoff enthält, wobei die aus den drei Farbstoffen gebildete Mischung unbunt ist und vorzugsweise einer der beiden zusätzlichen Farbstoffe ein Anthrachinon ist.

11. Flüssigkristallmischung nach Anspruch 10, dadurch gekennzeichnet, dass der gelbe Farbstoff 1,5-Dihydroxy-2-(methoxyphenyl)anthrachinon ist, dass der blaue Farbstoff 1,5-Diamino-4,8-dihydroxy-3,7-di(4-methoxyphenyl)anthrachinon ist und dass der dritte Farbstoff 1,5-Diamino-2,6-di(phenylimino-methyl)anthrachinonist, wobei die drei Farbstoffe in einem Gewichtsverhältnis von 1:0,8–1,3:0,2–0,4, insbesondere etwa 1:1:0,33, zueinander stehen.

12. Verfahren zur Herstellung des Farbstoffs einer Flüssigkristallmischung gemäss Anspruch 4, dadurch gekennzeichnet, dass man 1,5-Dinitro-2,6-dimethyl-anthrachinon in Essigsäure, Acetanhydrid und konzentrierter Schwefelsäure löst, bei Temperaturen um 0°C mit Chromtrioxid versetzt und die Lösung auf Eis giesst und extrahiert, anschliessend das erhaltene Diacetat in wässriger Natriumsulfidlösung reduziert und nach der Aufarbeitung durch Erhitzen in konzentrierter Salzsäure hydrolisiert, hiernach das erhaltene Produkt nach dem Trocknen i.V. einige Stunden in Anilin, dem etwas Kaliumcarbonat zugegeben wurde, erhitzt und schliesslich die dunkelroten Kristalle, die sich aus der heiss filtrierten Lösung abscheiden, durch Chromatographie an Kieselgel reinigt.

## Claims

1. A liquid crystal mixture having a pleochroic anthraquinone dye of the general formula

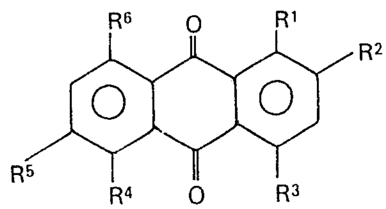

where $R^1$, $R^3$, $R^4$, $R^6$ = H, OH, $OCH_3$, $NH_2$, $NHCH_3$, $NO_2$, characterised in that $R^2$ is

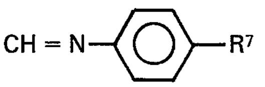

($R^7$ = H, alkyl, cycloalkyl, alkoxy, alkylmercapto, amino, alkylamino, dialkylamino, nitro, cyano, halogen);

$R^5$ is 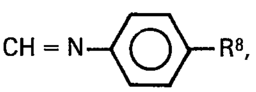

CHO, $COOR^9$, $CH_2$-$OR^9$ ($R^8$ = H, alkyl, cylcoalkyl, alkoxy, alkylmercapto, amino, alkyl amino, dialkylamino, nitro, cyano, halogen; $R^9$ = H, alkyl); and either $R^1$, $R^4$ = H, OH, $NH_2$, $NHCH_3$, $NO_2$, $OCH_3$, at least one of the two residues being $NH_2$ or $NHCH_3$, $R^3$ = $R^6$ = H; or $R^3$, $R^6$ = H, OH, $NH_2$, $NHCH_3$, $NO_2$, $OCH_3$, at least one of the residues being $NH_2$ or $NHCH_3$ and $R^1$ = $R^4$ = H.

2. A liquid crystal mixture according to Claim 1, characterised in that $R^1 = R^4 = NH_2$; $R^2 = R^5$.

3. A liquid crystal mixture according to Claim 2, characterised in that $R^7 = C_nH_{2n+1}$ ($0 \leqq n \leqq 8$).

4. A liquid crystal mixture according to Claim 3, characterised in that n = 0.

5. A liquid crystal mixture according to Claim 3, characterised in that n = 4.

6. A liquid crystal mixture according to Claim 2, characterised in that $R^7$ is $O$-$C_nH_{2n+1}$ ($0 \leqq n \leqq 8$).

7. A liquid crystal mixture according to Claim 6, characterised in that n = 4.

8. A liquid crystal mixture according to Claim 1, characterised in that $R^1 = R^4 = NH_2$, $R^7 = C_nH_{2n+1}$ ($0 \leqq n \leqq 8$), $R^5$ = CHO.

9. A liquid crystal mixture according to Claim 8, characterised in that n = 4.

10 A liquid crystal mixture according to one of Claims 1 to 9, characterised in that it additionally includes a yellow and a blue dye, the mixture formed from the three dyes being achromatic and one of the two additional dyes preferably being an anthraquinone.

11. A liquid crystal mixture according to Claim 10, characterised in that the yellow dye is 1,5-dihydroxy-2-(methoxyphenyl)-anthraquinone; that the blue dye is 1,5-diamino-4,8-dihydroxy-3,7-di-(4-methoxyphenyl)-anthraquinone and that the third dye is 1,5-diamino-2,6-di-(phenylimino-methyl)-anthraquinone, the three dyes having a weight ratio with respect to one another of 1:0.8–1.3:0.2–0.4, in particular approximately 1:1:0.33.

12. A process for the production of the dye of a liquid crystal mixture according to Claim 4, characterised in that 1,5-dinitro-2,6-dimethyl-anthraquinone is dissolved in acetic acid, acetic anhydride and concentrated sulphuric acid, treated with chromium trioxide at temperature around 0°C and the solution poured onto ice and extracted; the diacetate obtained is subsequently reduced in a aqueous sodium sulphide solution and after the treatment, is hydrolyzed by heating in concentrated hydrochloric acid; after drying in vacuum, the product obtained is heated in aniline, to which some calcium carbonate has been added, for a few hours, and the dark red crystals, which are separated from the solution on hot-filtration are finally purified by chromatography on silica gel.

**Revendications**

1. Mélange de cristaux liquides comprenant un colorant anthraquinonique pléochroïque de formule développée

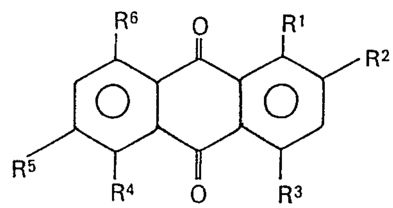

avec $R^1$, $R^3$, $R^4$, $R^6$ = H, OH, $OCH_3$, $NH_2$, $NHCH_3$, $NO_2$, caractérisé en ce que:

$R^2$ = 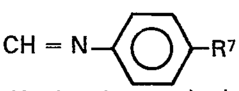

($R^7$ = H, alcoyle, cycloalcoyle, alcoxy, alcoylmercapto, amino, alcolyamino, dialcoylamino, nitro, cyano, halogène)

$R^5$ = 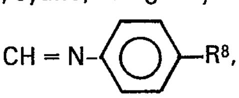

CHO, $COOR^9$, $CH_2$-$OR^9$ ($R^8$ = H, alcoyle normal, cycloalcoyle, alcoxy, alcoylmercapto, amino, alcoylamino, dialcoylamino, nitro, cyano, halogène; $R^9$ = H, alcoyle) et ou bien $R^1$, $R^4$ = H, OH, $NH_2$, $NHCH_3$, $NO_2$, $OCH_3$, l'un au moins des deux radicaux étant un $NH_2$ ou un $NHCH_3$, $R^3 = R^6$ = H ou bien $R^3$, $R^6$ = H, OH, $NH_2$, $NHCH_3$, $NO_2$, $OCH_3$, l'un au moins des deux radicaux étant un $NH_2$ ou un $NHCH_3$, $R_1 = R_4$ = H.

2. Mélange de cristaux liquides selon la revendication 1, caractérisé en ce que $R^1 = R^4 = NH_2$, $R^2 = R^5$.

3. Mélange de cristaux liquides selon la revendication 2, caractérisé en ce que $R^7 = C_nH_{2n+1}$ ($0 \leqq n \leqq 8$).

4. Mélange de cristaux liquides selon la revendication 3, caractérisé en ce que n = 0.

5. Mélange de cristaux liquides selon la revendication 3, caractérisé en ce que n = 4.

6. Mélange de cristaux liquides selon la revendication 2, caractérisé en ce que $R^7 = O$-$C_nH_{2n+1}$ ($0 \leqq n \leqq 8$).

7. Mélange de cristaux liquides selon la revendication 6, caractérisé en ce que n = 4.

8. Mélange de cristaux liquides selon la revendication 1, caractérisé en ce que $R^1 = R^4 = NH_2$, $R^7 = C_n H_{2n+1}$ ($0 \leqq n \leqq 8$), $R^5 = CHO$.

9. Mélange de cristaux liquides selon la revendication 8, caractérisé en ce que n = 4.

10. Mélange de cristaux liquides selon l'une des revendications 1 à 9, caractérisé en ce qu'il contient en plus un colorant jaune et un colorant bleu, le mélange formé des trois colorants étant non coloré et l'un des deux colorants supplémentaires étant de préférence une anthraquinone.

11. Mélange de cristaux liquides selon la revendication 10, caractérisé en ce que le colorant jaune est la 1,5-dihydroxy-2-(méthoxyphényl)anthraquinone, le colorant bleu est la 1,5-diamino-4,8-dihydroxy-3,7-di (4-méthoxyphényl)anthraquinone et le troisième colorant est la 1,5-diamino-2,6-di(phénylimino-méthyl)anthraquinone, les trois colorants étant dans un rapport pondéral de 1:0,8 à 1,3:0,2 à 0,4, notamment dans le rapport pondéral de 1:1:0,33 environ.

12. Procédé de préparation du colorant d'un mélange de cristaux liquides selon la revendication 4, caractérisé en ce qu'il consiste à dissoudre de la 1,5-dinitro-2,6-diméthyl-anthraquinone dans de l'acide acétique, de l'anhydride acétique et de l'acide sulfurique, à la faire réagir sur du trioxyde de chrome à des températures voisines de 0°C et à verser la solution sur de la glace et à lui faire subir une extraction, à réduire ensuite le diacètate obtenu dans une solution aqueuse de sulfure de sodium et, après le traitement, à hydrolyser par chauffage dans de l'acide chlorhydrique concentré, à chauffer ensuite le produit, obtenu après le séchage, sous vide pendant quelques heures dans de l'aniline additionnée d'un peu de carbonate de potassium et enfin à purifier par chromatographie sur gel de silice les cristaux rouges foncés qui précipitent dans la solution filtrée à chaud.

FIG 1

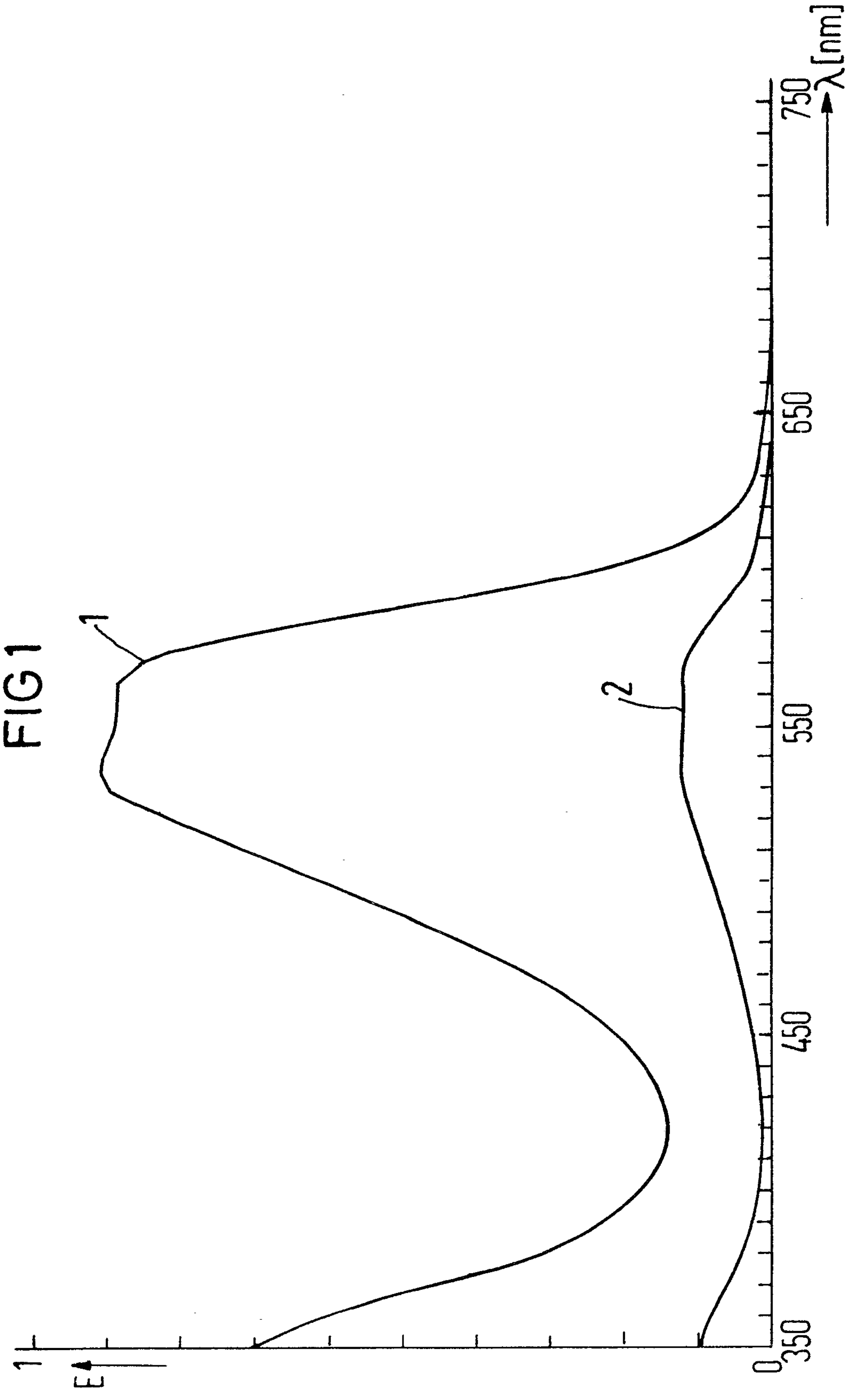

FIG 2

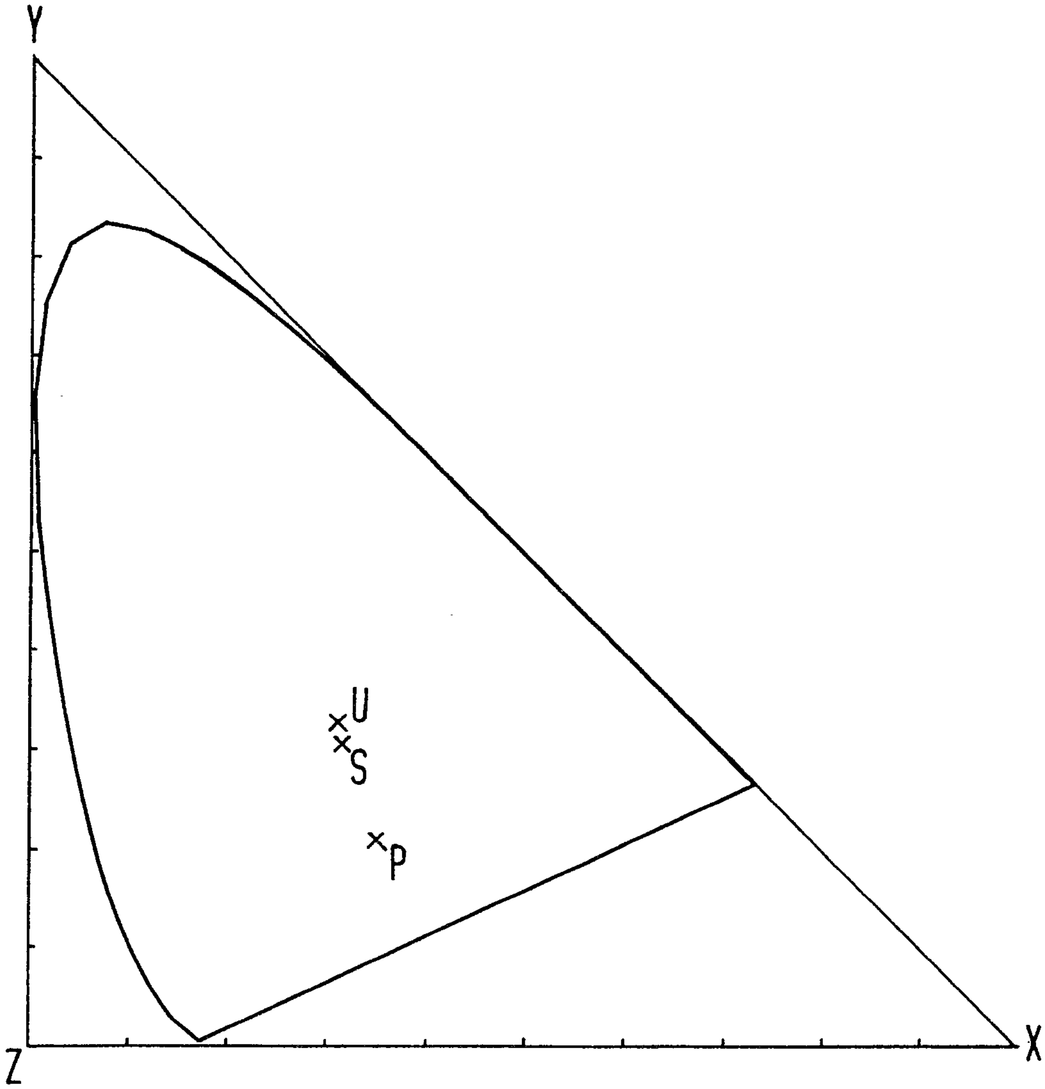

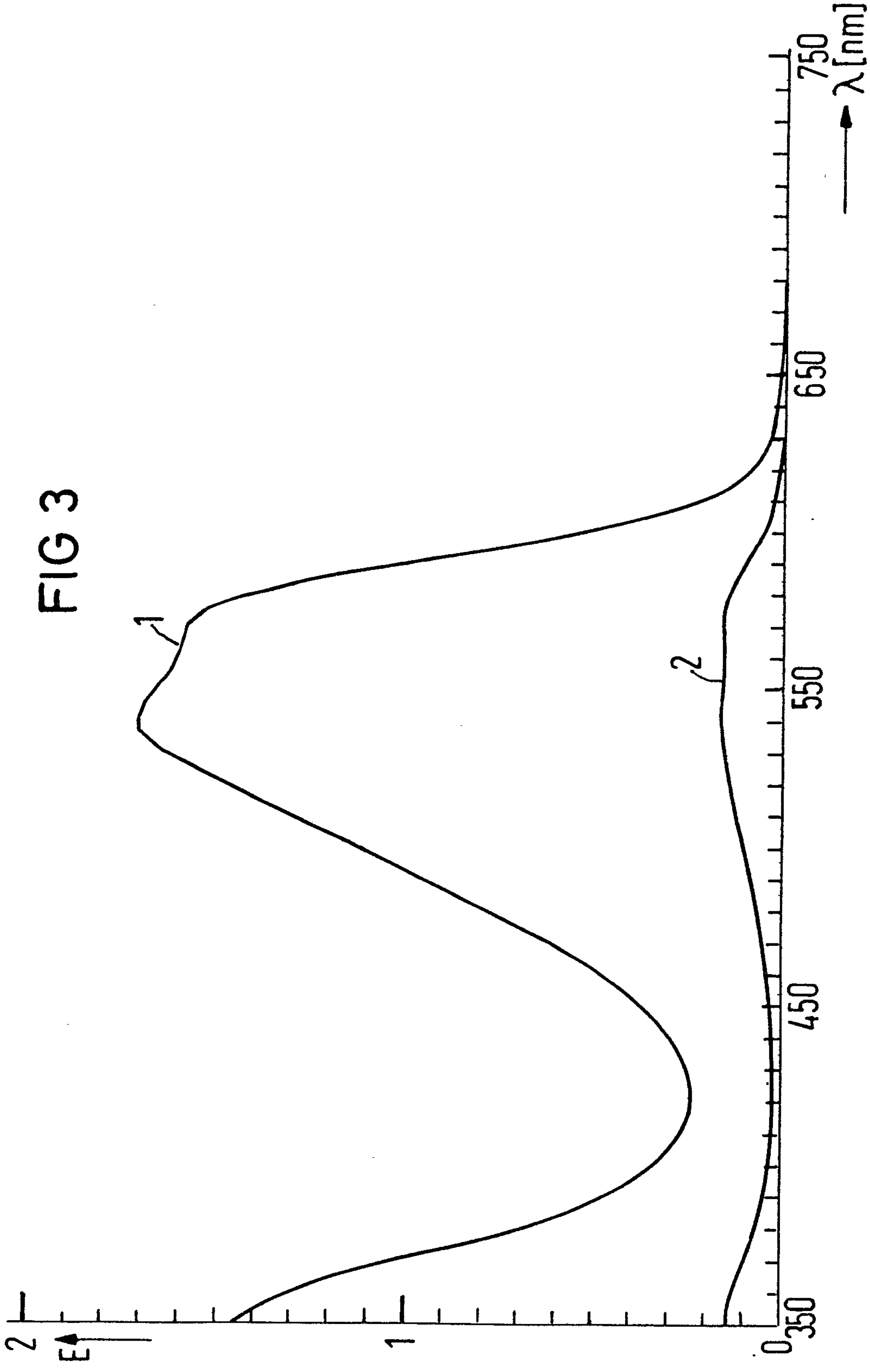


FIG 3

FIG 4

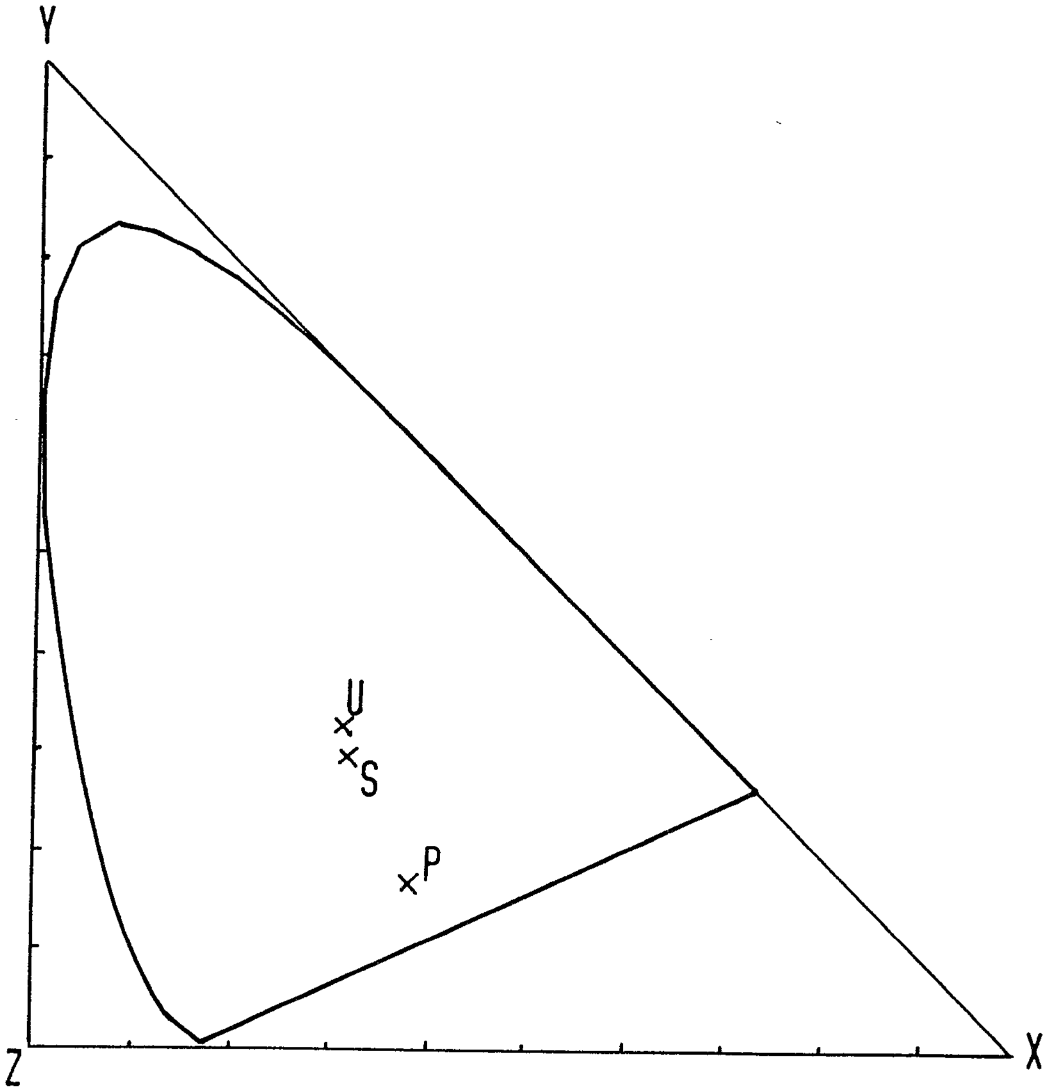

FIG 5

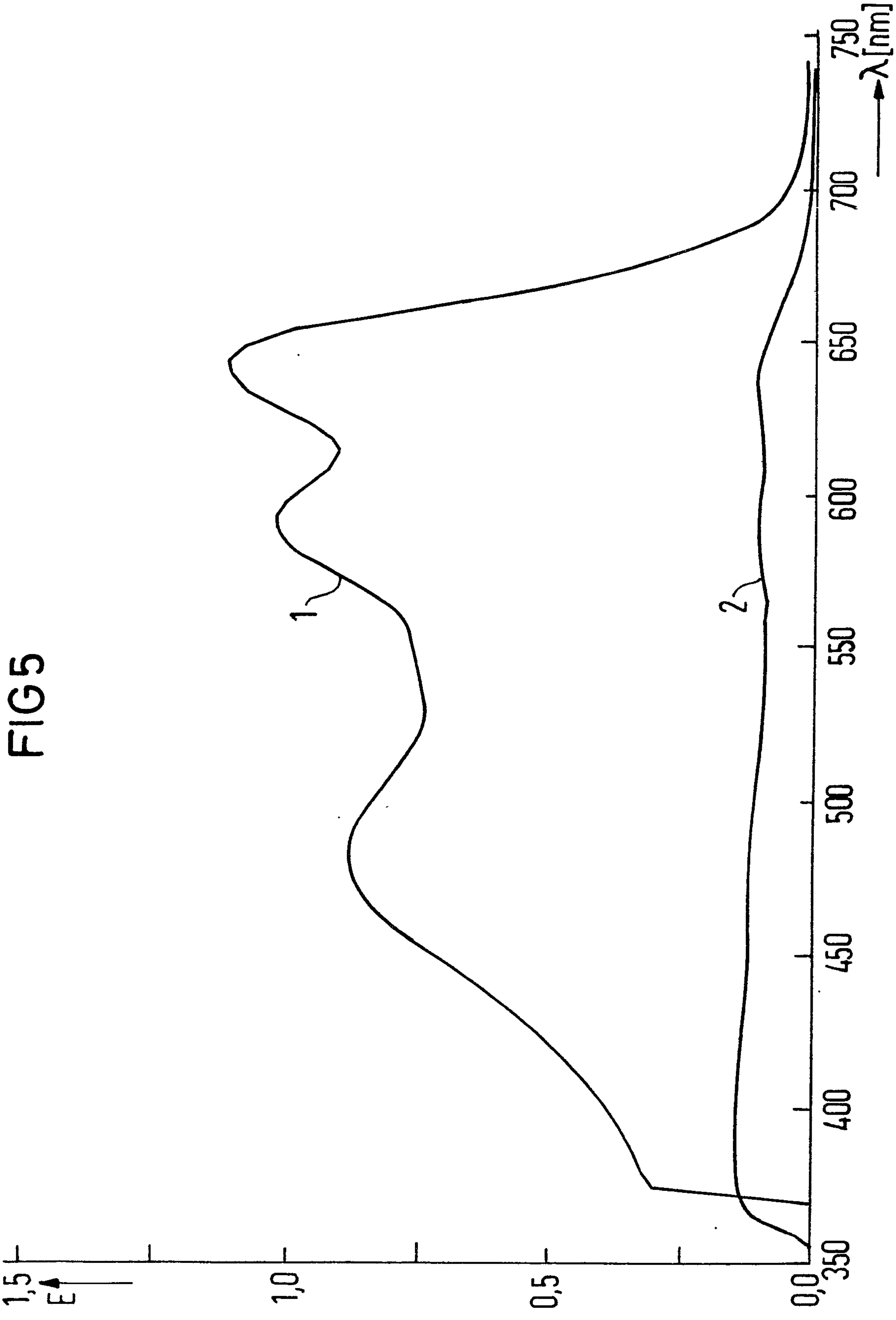

FIG 6